Europäisches Patentamt

European Patent Office

Office européen des brevets

(11) Veröffentlichungsnummer: **0 339 328 B1**

(12) **EUROPÄISCHE PATENTSCHRIFT**

(45) Veröffentlichungstag der Patentschrift: **16.06.93**

(21) Anmeldenummer: **89106103.8**

(22) Anmeldetag: **07.04.89**

(51) Int. Cl.5: **F16H 61/06**

(54) **Steuerventil für eine hydraulisch betätigbare Kupplung eines automatischen Kraftfahrzeuggetriebes.**

(30) Priorität: **29.04.88 DE 3814547**

(43) Veröffentlichungstag der Anmeldung:
**02.11.89 Patentblatt 89/44**

(45) Bekanntmachung des Hinweises auf die
Patenterteilung:
**16.06.93 Patentblatt 93/24**

(84) Benannte Vertragsstaaten:
**DE FR GB**

(56) Entgegenhaltungen:
**EP-A- 0 210 485**
**DE-C- 3 417 784**
**US-A- 2 409 506**
**US-A- 3 706 240**
**US-A- 4 265 346**

(73) Patentinhaber: **FORD-WERKE AKTIENGESELL-
SCHAFT
Werk Köln-Niehl Henry-Ford-Strasse Postfach 60 40 02
W-5000 Köln 60(DE)**

(84) Benannte Vertragsstaaten:
**DE**

(73) Patentinhaber: **FORD MOTOR COMPANY LI-**

**MITED
Eagle Way
Brentwood Essex CM13 3BW(GB)**

(84) Benannte Vertragsstaaten:
**GB**

(73) Patentinhaber: **FORD FRANCE SOCIETE ANO-
NYME
344 Avenue Napoléon Bonaparte B.P. 307
F-92506 Rueil Malmaison Cedex(FR)**

(84) Benannte Vertragsstaaten:
**FR**

(72) Erfinder: **Schulz, Winfried
Stefan-Lochner-Strasse 109
W-5024 Pulheim(DE)**
Erfinder: **Graef, Kurt
Römerfeldstrasse 7
W-5024 Pulheim(DE)**
Erfinder: **Kirchhoffer, Johann
Kapuzinerstrasse 2
W-5000 Köln 60(DE)**

(74) Vertreter: **Messulam, Alec Moses et al
A. Messulam & Co. 24 Broadway
Leigh on Sea Essex SS9 1BN (GB)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

**Beschreibung**

Die Erfindung bezieht sich auf ein Steuerventil für eine hydraulisch betätigbare Kupplung eines automatischen Kraftfahrzeuggetriebes der im Oberbegriff des Patentanspruches erläuterten Art.

Das Steuerventil für eine hydraulisch betätigbare Kupplung eines automatischen Kraftfahrzeuggetriebes ist insbesondere für die Anwendung in einem automatischen Kraftfahrzeuggetriebe geeignet, wie es in dem Deutschen Patent DE-C-3 417 784 der Anmelderin beschrieben ist.

Aus der US-A-4,265,346 der Muttergesellschaft der Anmelderin ist bereits ein Steuerventil für eine hydraulisch betätigbare Kupplung eines automatischen Kraftfahrzeuggetriebes bekannt, das in die Systemdruckleitung vom Handschaltventil zur Kupplung eingeschaltet ist und aus einem in einer Ventilkammer verschiebbaren Ventilkörper mit zwei Steuerbünden besteht, an dem zwischen den Steuerbünden der Systemdruck und an dessen einem Ende eine Feder und an dessen anderem Ende ein Rückkopplungskanal einwirkt und in der Federkammer zusätzlich der über eine Drosselstelle reduzierte und über einen Akkumulator verzögerte Systemdruck einwirkt, um ein Einrücken des Vorwärtsgangbereiches abzudämpfen.

Das bekannte Steuerventil weist den Nachteil auf, daß es für seine Funktion ein Akkumulatorventil benötigt, das normalerweise durch das bereitzustellende Volumen verhältnismäßig viel Bauraum erfordert. Solcher Bauraum ist jedoch in der Steuerventilanordnung eines automatischen Kraftfahrzeuggetriebes stets sehr begrenzt.

Darüber hinaus weist das bekannte Steuerventil noch den Nachteil auf, daß die Regulierzeit für den Anlegedruck bei gering geöffneter Drosselklappe und teilweise geöffneter Drosselklappe gleich ist und daß bereits zu Beginn der Regulierfunktion der Eingangs-Anlegedruck höher ist und daß während der Regulierzeit ein steiler Druckanstieg erfolgt.

Die Aufgabe der Erfindung ist es ein Steuerventil für eine hydraulisch betätigbare Kupplung eines automatischen Kraftfahrzeuggetriebes der im Oberbegriff des Patentanspruches erläuterten Art zu schaffen, das ein Einrücken des Rückwärtsganges abdämpfen soll und das ohne Akkumulatorventil in der Lage ist, eine unterschiedliche Regulierzeit für den Anlegedruck sowohl bei geringer Öffnung der Drosselklappe als auch bei teilweiser Öffnung der Drosselklappe auf niedrigem Eingangs-Anlegedruck-Niveau zur Verfügung zu stellen.

Diese Aufgabe wird gemäß der Erfindung gelöst, in dem ein Steuerventil der im Oberbegriff des Patentanspruches erläuterten Art die im Kennzeichenteil des Patentanspruches aufgezeigten Merkmale aufweist.

Dadurch, daß als Akkumulatorraum die Anlegeseite des Druckmittelservos einer gleichzeitig zu betätigenden zweiten hydraulischen Kupplung dient, deren auf der Löseseite angeordnete Rückführfederanordnung eine geringere Kraft aufbringt als die Rückführfederanordnung auf der Löseseite der ersten hydraulisch betätigbaren Kupplung, wird ohne ein erforderliches Akkumulatorventil eine von der Öffnung der Drosselklappe stark unterschiedliche Regulierzeit für den Anlegedruck erzielt.

Durch eine zusätzliche Drosselstelle in der zur ersten Kupplung führenden Leitung wird die geeignete Abstimmung der Beaufschlagung der beiden Kupplungen bestimmt.

Dadurch wird ein Einrücken des Rückwärtsganges insbesondere bei gering geöffneter Drosselklappe so günstig abgedämpft, daß es nicht zu den unerwünschten störenden Ruckerscheinungen kommt.

Die Erfindung wird anhand eines in den beiliegenden Zeichnungen gezeigten Ausführungsbeispieles näher erläutert. Es zeigt:

Fig. 1 - eine teilweise Schnittdarstellung eines automatischen Kraftfahrzeuggetriebes mit dem Schaltkreis für das erfindungsgemäße Steuerventil;

Fig. 2 - eine schematische Darstellung des erfindungsgemäßen Steuerventiles;

Fig. 3 - ein Diagramm des Anlegedruckes über der Zeit bei geringer und teilweise geöffneter Drosselklappe und.

Fig. 4 - ein Druckaufbau-Diagramm, allgemein.

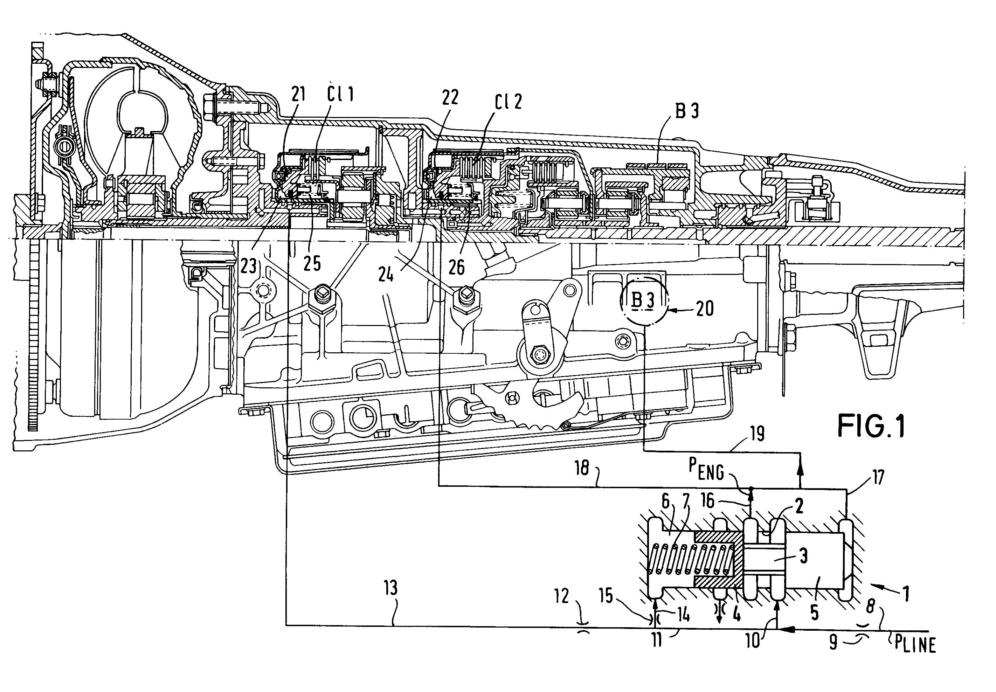

Das in der Figur 1 gezeigte automatische Kraftfahrzeuggetriebe entspricht dem Getriebe, das in der DE-C-3 417 784 eingehend erläutert ist und bei dem das erfindungsgemäße Steuerventil zweckmäßig angewendet werden kann.

Bei diesem Getriebe muß zum Einrücken des Rückwärtsganges sowohl eine erste Kupplung CL1 als auch eine zweite Kupplung CL2 eingerückt und ein Bremsband B3 angelegt werden.

Ein Steuerventil 1 besteht aus einem in einer Ventilkammer 2 angeordneten verschiebbaren Ventilkörper 3 mit zwei Steuerbünden 4 und 5. Am einen Ende der Ventilkammer 2 ist eine Federkammer 6 ausgebildet in der eine Feder 7 angeordnet ist, die den Ventilkörper 3 in eine rechte Endlage drückt.

Zwischen den beiden Steuerbünden 4 und 5 wirkt von einer Leitung 8 kommend der Systemdruck $P_{Line}$ über eine erste Drosselstelle 9 und eine Leitung 10 auf den Ventilkörper 3 ein. Über eine Leitung 11, eine zweite Drosselstelle 12 und eine Leitung 13 gelangt der Systemdruck zur ersten Kupplung CL1 und weiter über eine Leitung 14 und eine dritte Drosselstelle 15 in die Federkammer 6 des Steuerventiles 1.

Der einregulierte Anlegedruck $P_{ENG}$ wird über eine Leitung 16 abgeführt und wirkt über eine Rückkoppelungsleitung 17 auf das rechte Ende des Ventilkörpers 3 ein und wird über eine Leitung 18 zur zweiten Kupplung CL2 und eine Leitung 19 zum Druckmittelservo 20 für das Bremsband B3 geführt.

Für die hydraulische Betätigung der ersten Kupplung CL1 ist ein Druckmittelservo 21 und für die Betätigung der hydraulischen Kupplung CL2 ist ein Druckmittelservo 22 vorgesehen.

Die Druckmittelservos 21 und 22 bestehen hierbei jeweils aus einer Anlegeseite 23 bzw. 24 und diesen gegenüberliegend angeordneten Rückführfederanordnungen 25 und 26.

Gemäß der Erfindung werden die Rückführfederanordnungen der Druckmittelservos 21 und 22 derart ausgelegt, daß die Rückführfederanordnung 25 für die erste Kupplung CL1 auf eine geringere Kraft ausgelegt ist als die Rückführfederanordnung 26 der Kupplung CL2.

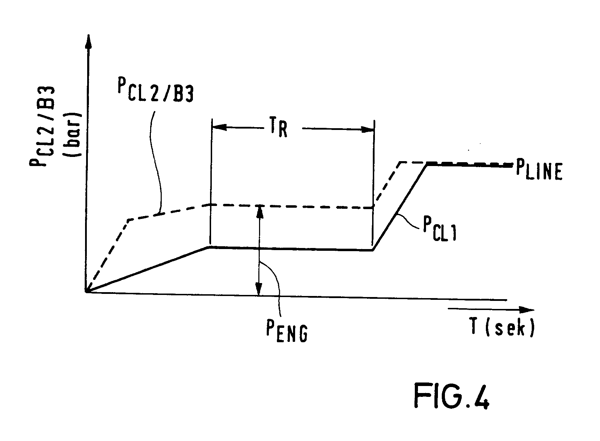

Durch die weitere Auslegung der ersten Drosselstelle 9 und den zweiten und dritten Drosselstellen 12 und 15 in Verbindung mit der Kraft der Feder 7 und der Wirkung der Rückkopplungsleitung 17 kann ein aus dem Diagramm der Fig. 4 ersichtlicher verzögerter Verlauf des Anstiegs des Anlegedruckes $P_{ENG}$ über der Zeit erzielt werden.

$$P_{ENG} \qquad \frac{F_{Feder\ 7}}{A_{\emptyset\ Bund\ 5}} \quad +\ P_{CL1}$$

Wobei $F_{Feder\ 7}$ die Kraft der auf den Ventilkörper 3 einwirkenden Feder 7, $A_{\emptyset\ Bund\ 5}$ die Fläche des Bundes 5 am Ventilkörper 3 und $P_{CL1}$ den Kontrolldruck bedeutet, der sich aus der Beaufschlagung des Servos 21 der ersten Kupplung CL1 mit durch die Drosselstelle 12 reduziertem Linedruck und der Kraft der Federanordnung 25 an der ersten Kupplung CL1 ergibt.

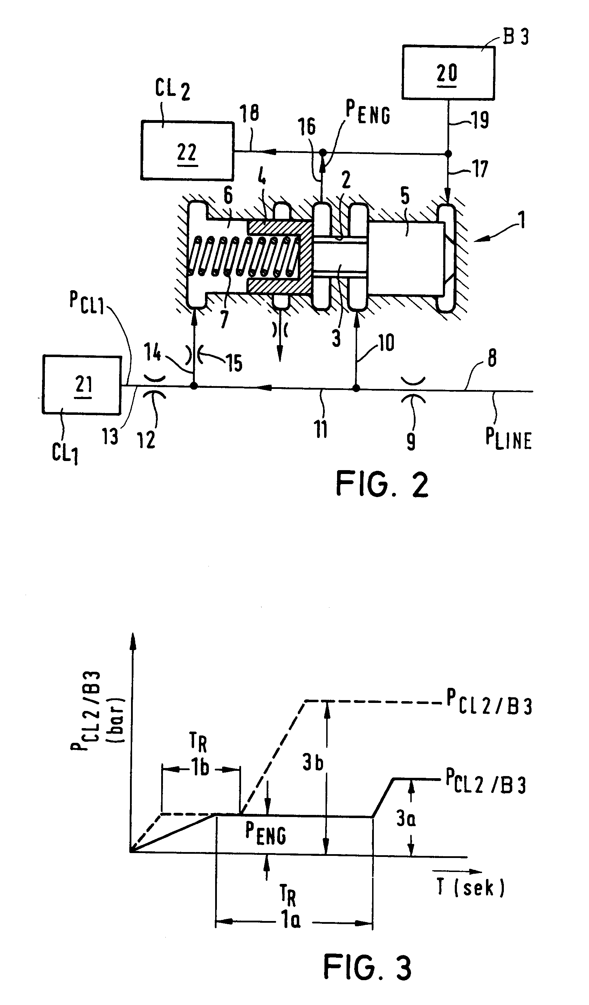

Das Diagramm in Fig. 3, das den Anlege- bzw. Betätigungsdruck $P_{ENG}$ bzw. $P_{CL2/B3}$ über der Zeit T zeigt, wird im nachfolgenden näher erläutert.

Wie aus dem in Fig. 3 in vollen Linien gezeichneten Verlauf des Anstiegs des Anlege- bzw. Betätigungsdruckes zu ersehen ist, weist das Steuerventil bei geringer Öffnung der Drosselklappe und dementsprechend niedriger Kapazität der Druckmittelpumpe eine verhältnismäßig lange Regulierzeit, Abschnitt 1a, auf, bis nach einem neuerlichen Anstieg der endgültige Betätigungsdruck $P_{CL2/B3}$ erreicht wird.

Wie aus dem in Fig. 3 in gestrichelter Linie gezeichneten Verlauf des Anstiegs des Anlege- bzw. Betätigungsdruckes zu ersehen ist, steigt der Druck bei teilweise geöffneter Drosselklappe anfangs schneller an und wird dann über eine kürzere Regulierzeit, Abschnitt 1b, konstant gehalten und führt, nachdem die Kapazität der Druckmittelpumpe bei dieser Drosselklappenstellung größer ist, schneller zu einem weiteren raschen Anstieg auf den endgültigen Betätigungsdruck $P_{CL2/B3}$ .

Der Anlegedruck während der unterschiedlichen Regulierzeiten 1a und 1b bleibt wie durch $P_{ENG}$ aufgezeigt ist, konstant, da er unabhängig vom Drosseldruck ist und da das Steuerventil keine Differenzflächen aufweist.

Wie durch die Abschnitte 3a und 3b ersichtlich ist, ist der endgültige Betätigungsdruck $P_{CL2/B3}$ bei teilweise geöffneter Drosselklappe wesentlich höher als bei minimal geöffneter Drosselklappe und dementsprechend ist es wichtig, daß der Anlegedruck $P_{ENG}$ während der Regulierzeit auf niedrigem Niveau gehalten wird, da nur so ein störender Einrückruck beim Bewegen des Handschaltventils von der Stellung Neutral in die Stellung für den Rückwärtsgang im Leerlaufbetrieb sicher vermieden werden kann.

Wie aus Fig. 4 ersichtlich ist, ist der Verlauf des Druckanstieges des Anlegedruckes $P_{ENG}$ für die zweite Kupplung CL2 und das Bremsband B3 abhängig vom Verlauf des Druckanstieges des Betätigungsdruckes $P_{CL1}$ für die erste Kupplung CL1.

**Patentansprüche**

1.  Steuerventil für eine hydraulisch betätigbare Kupplung (CL2) eines automatischen Kraftfahrzeuggetriebes, das in die Systemdruckleitung vom Handschaltventil zur Kupplung eingeschaltet ist und aus einem in einer Ventilkammer verschiebbaren Ventilkörper (5) mit zwei Steuerbünden besteht, an dem zwischen den Steuerbünden der Systemdruck und an dessen einem Ende eine Feder (7) und an dessen anderem Ende ein Rückkopplungskanal (17) einwirkt und in der Federkammer (6) zusätzlich der über eine Drosselstelle (15) reduzierte und über einen Akkumulator verzögerte Systemdruck einwirkt, **dadurch gekennzeichnet**, daß als Akkumulatorraum die Anlegeseite (23) des Druckmittelservos (21) einer gleichzeitig zu betätigenden weiteren hydraulischen Kupplung (CL1) dient, deren auf der Löseseite angeordnete Rückführfederanordnung (25) eine geringere Kraft aufbringt, als die Rückführfederanordnung (26) auf der Löseseite des Druckmittelservos (22) für die hydraulisch betätigbare Kupplung (CL2).

2. Steuerventil nach Anspruch 1, **dadurch gekennzeichnet**, daß der Systemdruck ($P_{Line}$) über eine kalibrierte Drosselstelle (12) dem Druckmittelservo (21) der ersten Kupplung (CL1) zugeführt wird.

## Claims

1. A control valve for an hydraulically actuated clutch (CL2) of an automatic motor-vehicle gearbox, which is fitted in the system pressure line from the manual shift valve to the clutch and comprises a valve member (5) with two control collars which is displaceable in a valve chamber and upon which the system pressure acts between the control collars and upon one end of which a spring (7) acts and upon the other end of which a feedback duct (17) acts and the system pressure reduced by way of a throttle point (15) and delayed by way of an accumulator additionally acts in the spring chamber (6), characterized in that the accumulator space is constituted by the application side (23) of the pressure-medium servo (21) of an additional hydraulic clutch (CL1) which is to be actuated at the same time and whose restoring-spring arrangement (25) provided on the release side exerts a smaller force than the restoring-spring arrangement (26) on the release side of the pressure-medium servo (22) for the hydraulically actuated clutch (CL2).

2. A control valve according to Claim 1, characterized in that the system pressure ($P_{Line}$) is supplied to the pressure-medium servo (21) of the first clutch (CL1) by way of a calibrated throttle point (12).

## Revendications

1. Valve de commande qui est destinée à un embrayage à actionnement hydraulique (CL2) d'une transmission automatique de véhicule automobile, qui est montée dans la conduite de pression en ligne allant de la valve manuelle de commutation à l'embrayage et qui se compose d'un corps de valve (3), muni de deux parties de piston de commande et coulissant dans une chambre de valve, sur lequel la pression en ligne agit entre les parties du piston de commande, un ressort (7) agissant sur l'une de ses extrémités et un canal de réinjection (17) agissant sur son autre extrémité, cependant que la pression en ligne qui est réduite par l'intermédiaire d'un point d'étranglement (15) et qui est retardée par l'intermédiaire d'un accumulateur agit en complément dans la chambre (6) contenant le ressort, caractérisée par le fait que l'on utilise comme chambre d'accumulateur le côté d'application de la pression (23) du servomécanisme à fluide sous pression (21) d'un autre embrayage hydraulique (CL1) qui doit être actionné simultanément et dont le dispositif à ressort de rappel (25) disposé du côté du débrayage exerce une force inférieure à celle exercée par le dispositif à ressort de rappel (26) sur le côté du débrayage du servomécanisme à fluide sous pression (22) destiné à l'embrayage à actionnement hydraulique (CL2).

2. Valve de commande selon la revendication 1, caractérisée par le fait que la pression en ligne ($P_{LINE}$) est amenée par l'intermédiaire d'un point d'étranglement calibré (12) au servomécanisme à fluide sous pression (21) du premier embrayage (CL1).

FIG.1

EP 0 339 328 B1

FIG. 2

FIG. 3

FIG.4